# EUROPEAN PATENT APPLICATION

(11) **EP 4 455 770 A1**
(43) Date of publication of application: **30.10.2024**
(21) Application number: 22910834.5
(22) Date of filing: 02.12.2022
(51) Int. Cl.: G02C 13/00, B23K 26/00, B23K 26/0622, G02B 1/11, G02C 7/00

(54) **METHOD FOR MANUFACTURING SPECTACLE LENS, SPECTACLE LENS, AND SPECTACLES**

(30) Priority: 22.12.2021 JP 2021207964
(71) Applicant: Hoya Lens Thailand Ltd., Pathumthani 12130 (TH)
(72) Inventor: OOKUBO Shigeki, Tokyo 160-8347 (JP)
(74) Representative: Betten & Resch
(86) International application number: PCT/JP2022/044572
(87) International publication number: WO 2023/120117

(57) **Abstract**

There is provided a method for manufacturing a spectacle lens and a related technique thereof, the method including: performing desired marking processing by irradiating one surface of a spectacle lens with laser, the spectacle lens having an object-side surface and an eyeball-side surface each having a different anti-reflection film, the marking processing including: determining an applicable wavelength of the laser to be used; selecting a surface with an anti-reflection film having a relatively low reflectance to the applied wavelength, out of the object-side surface and the eyeball-side surface; and performing laser irradiation to the selected surface using the applied wavelength.

## Description

### Technical Field

The present invention relates to a method for manufacturing a spectacle lens, a spectacle lens, and spectacles.

### Description of related art

Patent document 1 discloses a plastic lens for spectacles characterized by having an anti-reflection film including 7 layers consisting of alternating layers of low refractive index and high refractive index on a plastic substrate, in which a design dominant wavelength λ₀ is in a range of 480 nm or more and 550 nm or less, and with a layer closest to a base material as a first layer, and layer numbers are assigned outward in order to set an odd numbered layer as SiO₂ layer and an even numbered layer as a TiO₂ layer. In this case, a total film thickness from the first layer to the third layer is set in a range of 180 nm or more and 250 nm or less, a physical thickness ratio of the SiO₂ layer and the TiO₂ layer is in a predetermined relationship, and an optical thickness of each layer is in a predetermined relationship.

### Prior art document

### Patent document

[Patent Document 1] Patent No. 3988504

### Summary of the invention

### Problem to be solved by the invention

It is known to apply marks or characters related to the type and prescription of a spectacle lens, to a lens surface by means such as engraving. These are formed using a marking method that does not impede a wearer's vision.

On the other hand, in addition to the purpose described above, it is considered that by applying a marking such as a predetermined letter, symbol, and design on the lens, a design effect, an identification effect, a brand strategy effect, etc., are added.

One possible method for forming a desired pattern such as a letter on a spectacle lens is to partially remove a film formed on the surface of the lens by irradiating it with laser beam.

Many commercially available spectacle lenses have a visible light anti-reflection function on their surfaces (for example, Patent document 1). The anti-reflection film is designed primarily to enable a spectacle wearer to obtain a clear field of vision.

On the other hand, the anti-reflection film on the spectacle lens does not necessarily have an anti-reflection function for short wavelengths (for example, ultraviolet wavelengths of 400 nm or less) or long wavelengths (infrared wavelengths of 800 nm or more) outside the wavelength range of visible light, and many lenses have reflectance exceeding 10%.

On the other hand, when performing processing using laser, if ultraviolet or infrared wavelength is used as a processing laser wavelength, an energy from irradiation will not reach a target material to be removed sufficiently. This likely to cause inconvenience that makes precise processing difficult.

In contrast, if a laser output is increased, the following problem was found. The processing may become uneven, or damage may occur to the underlying layer below the film to be removed, and damaged portion impedes a wearer's vision and film peeling occurs at the processed portion.

An object of the present disclosure is to provide a technique that allows precise processing to be performed efficiently and under stable conditions for a spectacle lens having an anti-reflection film on both an object-side surface and an eyeball-side surface.

Also, an object of the present disclosure is to provide a spectacle lens which has an anti-reflection film on both the object-side surface and the eyeball-side surface, and on which decoration is applied.

### Means for solving the problem

According to a first aspect of the present invention, there is provided a method for manufacturing a spectacle lens, the method including:
performing desired marking processing by irradiating one surface of a spectacle lens with laser, the spectacle lens having an object-side surface and an eyeball-side surface each having a different anti-reflection film,
the marking processing comprising:
   determining an applicable wavelength of the laser to be used;
   selecting a surface with an anti-reflection film having a relatively low reflectance to the applied wavelength, out of the object-side surface and the eyeball-side surface; and
   performing laser irradiation to the selected surface using the applied wavelength.

According to a second aspect of the present invention, there is provided a method for manufacturing a spectacle lens, the method including:
performing desired marking processing by irradiating one surface of a spectacle lens with laser, the spectacle lens having an object-side surface and an eyeball-side surface each having a different anti-reflection film,
the marking processing comprising:
   selecting a surface with a relatively low reflectance for light in a predetermined wavelength range, out of the object-side surface and the eyeball-side surface; and
   applying laser irradiation to the selected surface using a laser beam having a wavelength within the predetermined wavelength range.

According to a third aspect of the present invention, there is provided the method for manufacturing a spectacle lens of the first or second aspect, wherein the applied wavelength or the wavelength within the predetermined wavelength range is within a range of 200 to 400 nm, or within a range of 800 to 1100 nm.

According to a fourth aspect of the present invention, there is provided the method for manufacturing a spectacle lens of any one of the first to third aspects, wherein the anti-reflection film on the selected surface has a reflectance of 10% or less to the applied wavelength or the wavelength within the predetermined wavelength range.

According to a fifth aspect of the present invention, there is provided the method for manufacturing a spectacle lens of any one of the first to fourth aspects, wherein the anti-reflection film on the selected surface has a reflectance lower than the other surface by 10% or more with respect to the applied wavelength or the wavelength within the predetermined wavelength range.

According to a sixth aspect of the present invention, there is provided the method for manufacturing a spectacle lens of any one of the first to fifth aspects, the method including:
performing desired laser processing by irradiating an anti-reflection film with ultrashort pulse laser; thereby
partially removing a predetermined layer including an outermost layer of a multilayer structure, the anti-reflection film having the multilayer structure including laminated layers of a low refractive index layer and a high refractive index layer, and being formed to coat an optical surface of a lens base material,
wherein the anti-reflection film on the selected surface includes a reactive layer that is relatively more reactive to irradiation with the ultrashort pulse laser than other layers included in the multilayer structure, and therefore the laser processing is performed to visually recognize the reactive layer by visible light by at least partially removing the reactive layer.

According to a seventh aspect of the present invention, there is provided the method for manufacturing a spectacle lens of the sixth aspect, wherein the ultrashort pulse laser has a pulse width of 10 femtoseconds or more and less than 100 picoseconds.

According to an eighth aspect of the present invention, there is provided a spectacle lens, which is a spectacle lens whose one surface is subjected to laser marking, having different anti-reflection films provided on an object-side surface and an eyeball-side surface,
wherein the anti-reflection film provided one surface has a lower reflectance than the anti-reflection film provided on the other surface, to at least light with a wavelength of 200 to 400 nm.

According to a nineth aspect or the present invention, there is provided a spectacle lens, which is a spectacle lens whose one surface is subjected to a laser marking, having different anti-reflection films provided on an object-side surface and an eyeball-side surface,
wherein the anti-reflection film provided on one surface has a lower reflectance than the anti-reflection film provided on the other surface, to at least light with a wavelength of 800 to 1100 nm.

According to a tenth aspect of the present invention, there is provided the spectacle lens of the eighth or nineth aspect, wherein the spectacle lens includes:
a lens base material having an optical surface; and
an anti-reflection film coating the optical surface of the lens base material,
the anti-reflection film having a multilayer structure including a laminated layer of a low refractive index layer and a high refractive index layer,
the anti-reflection film including a reactive layer that has a relatively higher reactivity to ultrashort pulse laser irradiation than other layers included in the anti-reflection film,
wherein a removed area after at least partially removing a predetermined layer including an outermost layer of the multilayer structure is marked with a marking that allows the removed area to be visually recognized by visible light, because the underlying high refractive index layer below the reactive layer or the reactive layer that remains partially is exposed.

According to an eleventh aspect of the present invention, there is provided a spectacle lens manufactured by the method for manufacturing a spectacle lens according to any one of the first to seventh aspects, or spectacles in which the spectacle lens according to any one of the eighth to tenth aspects, is fitted into a frame.

### Advantage of the invention

According to the present invention, a spectacle lens having an anti-reflection film on both an object-side surface and an eyeball-side surface can be precisely processed efficiently and under a stable condition.

Further, according to the present invention, a spectacle lens can be provided in which an anti-reflection film is provided on both the object-side surface and the eyeball-side surface, and which is decorated by laser processing.

### Brief description of the drawings

FIG. 1 is a plan view showing an example of processing a spectacle lens according to one embodiment of the present invention.
FIG. 2 is a flow chart showing an example of a procedure of a method for manufacturing a spectacle lens according to one embodiment of the present invention.
FIG. 3 is a side sectional view showing an example of a laminated structure of thin films in a spectacle lens according to one embodiment of the present invention.
FIG. 4A is an explanatory view showing a schematic configuration example of a laser processing device used in a method for manufacturing a spectacle lens according to one embodiment of the present invention, the processing device including a laser beam source unit, an AOM (Acousto Optics Modulator) system unit, a beam shaper unit, a galvano scanner unit, and an optical system, and is a view showing a configuration in which the AR film is irradiated with laser beam through these units.
FIG. 4B is an explanatory view showing a schematic configuration example of a laser processing device used in the method for manufacturing a spectacle lens according to one embodiment of the present invention, and is a view showing a configuration in which the AR film is irradiated with laser beam (that is, ultrashort pulse laser) through an optical system, etc., with a defocus setting.
FIG. 5A is an explanatory view showing an example of a main part configuration of a spectacle lens according to one embodiment of the present invention, and is an explanatory view showing an example of a main part composition of the spectacle lens according to the present embodiment.
FIG. 5B is an explanatory view showing an example of a main part configuration of the spectacle lens according to one embodiment of the present invention, and shows a specific example of an observation result of a cross section of the AR film using an electron microscope.
FIG. 6A is a photograph showing the result of processing an object-side surface of the spectacle lens according to a specific example using pulsed laser beam having a wavelength of 355 nm and a pulse width of 10 picos or more and less than 20 picos.
FIG. 6B is a photograph showing the result of processing an eyeball-side surface of the spectacle lens according to a specific example using pulsed laser beam having a wavelength of 355 nm and a pulse width of 10 picos or more and less than 20 picos.
FIG. 6C shows reflection characteristics (simulation data) of an anti-reflection film (1) (described later) and an anti-reflection film (2) (described later) of the spectacle lens according to a specific example, where a vertical axis indicates a reflectance (%) and a horizontal axis indicates a wavelength (nm).
FIG. 7 shows the results of determining a specific laser power range that provides a stable processing condition, when the anti-reflection film (1) and the anti-reflection film (2) are processed in the same manner as shown in FIG. 6.

### Detailed description of the invention

### <Purpose of the present embodiment>

Embodiments of the present invention will be described below based on the drawings.

The spectacle lens according to the present embodiment has an object-side surface and an eyeball-side surface as optical surfaces.

The "object-side surface" is a surface located on an object side when spectacles equipped with spectacle lenses are worn by a wearer.

The "eyeball-side surface" is the opposite, that is, the surface located on an eyeball side when spectacles equipped with spectacle lenses are worn by a wearer.

Generally, the object-side surface is a convex surface and the eyeball-side surface is a concave surface, that is, a spectacle lens is a meniscus lens.

This also applies to a spectacle lens after spherical processing (processed lens) whose peripheral edge is cut to match the shape of a spectacle frame.

That is, according to the present embodiment, there is provided a spectacle lens having an anti-reflection film on both the object-side and eyeball-side surfaces, and when the anti-reflection film is formed in which the object-side surface and the eyeball-side surface have different reflectance for light in a predetermined range of wavelengths, this difference is utilized.

Then, an optical surface having a lower reflectance to the wavelength of the applied laser is selected, and laser processing is performed from this optical surface side.

For example, when performing laser processing using a wavelength in a ultraviolet region, processing is performed to a surface formed with an anti-reflection film having a relatively low reflectance to a ultraviolet wavelength.

Also, there is provided the method for manufacturing a spectacle lens, including: applying laser irradiation to one surface of the spectacle lens each surface having a different anti-reflection film, thereby applying desired marking on the surface (or patterning, collectively referred to as marking in this application), and also there is provided the method for manufacturing a spectacle lens, including: selecting a surface with a relatively low reflectance to light in a predetermined wavelength range out of the object-side surface and the eyeball-side surface; and performing laser irradiation to the selected surface by using a laser beam having a wavelength within the predetermined range.

There is no particular limitation in the wavelength range to be used for laser irradiation, but it can be, for example, a wavelength of an ultraviolet region in a wavelength range of 200 to 400 nm. Specifically, the wavelength may be 355 nm (THG) or 266 nm (FHG), which will be described later.

Further, the reflectance on the lens surface for any laser beam within the above wavelength range varies depending on optical properties of the anti-reflection film formed on the lens surface. For example, as described above, by forming different anti-reflection film on each surface, the value obtained by subtracting the reflectance on one surface (for example, the object-side surface) from the reflectance on the other surface (for example, the eyeball-side surface) may be 10% or more (or 15% or more, or 20% or more) to the wavelength used for laser irradiation.

The wavelength-dependent reflectance characteristics of an anti-reflection film can be adjusted by changing the composition and film thickness of the individual layers (high refractive index layer, low refractive index layer, described later) of the multilayer structure that constitutes the anti-reflection film.

For example, when the used wavelength for laser irradiation is in the ultraviolet region, and the reflectance on the eyeball-side surface for this wavelength is relatively low compared to that on the object-side surface, laser processing can be performed to the eyeball-side surface. The laser processing may be a removal processing starting from an outermost layer using ablation, and the details will be described later.

Further, the spectacle lens according to the present embodiment is a spectacle lens in which the reflectance of light with a wavelength of at least 330 to 400 nm is lower on the eyeball-side surface than on the object-side surface of the spectacle lens, and is a spectacle lens whose eyeball-side surface is subjected to laser marking using a laser with a wavelength within the above wavelength range.

By using the method for manufacturing a spectacle lens according to the present embodiment, a spectacle lens is provided in which the object-side surface and the eyeball-side surface are each provided with different anti-reflection film, and laser marking is applied to the surface with a relatively low reflectance to the light of a predetermined wavelength.

When performing laser processing using the wavelength in the infrared region, the processing is performed to a surface provided with an anti-reflection film having a relatively low reflectance to infrared wavelengths. For example, the wavelength used for laser irradiation can be, for example, a wavelength in the infrared region in a range of 800 to 1100 nm. Specifically, 1064 nm laser may be used.

The present invention provides a spectacle lens in which the reflectance of light with a wavelength of at least 800 to 1100 nm is lower on the eyeball-side surface than on the object-side surface of the spectacle lens, and whose eyeball-side surface is subjected to marking by a laser using a wavelength within the above wavelength range.

### <One specific example of the present embodiment>

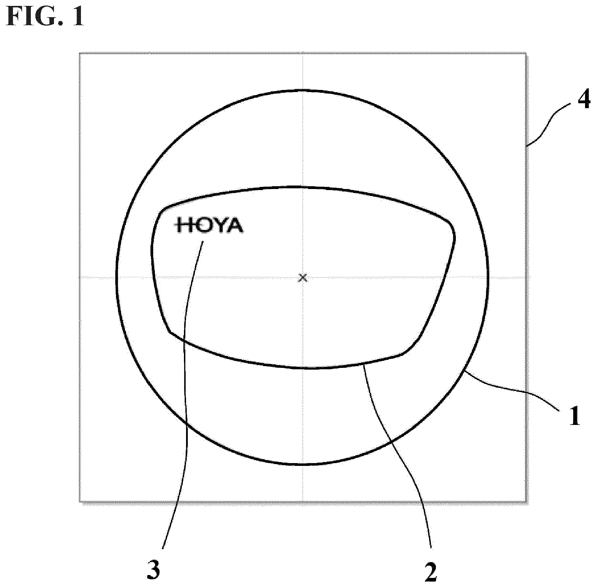

FIG. 1 is a plan view showing an example of processing a spectacle lens according to the present embodiment.

In the present embodiment, a spectacle lens 1 having a circle shape in a planar view (for example, outer diameter Φ is 60 to 80 mm) is subjected to spherical processing (frame cutting processing) in which the outer shape of the lens is cut to match a frame shape 2 of a spectacle frame worn by a wearer.

In the present embodiment, prior to the spherical processing, marking may be applied to an area corresponding to the inside of an outline of the frame shape.

The present embodiment shows a case in which a decorative pattern 3 representing a logo, a house mark, etc., character, symbol, design, etc., is marked on the optical surface so as to be located within a lens area after frame cutting.

For example, marking may be applied using laser irradiation processing that enables precise control of an irradiation position based on digital data. However, it is undesirable that marking causes deterioration in lens quality and functionality.

Therefore, in the present embodiment, the marking of the decorative pattern 3 is applied by a processing procedure described below.

### (1) Method for manufacturing a spectacle lens

Here, a procedure for processing a spectacle lens including marking of a decorative pattern, that is, a procedure for the method for manufacturing a spectacle lens according to the present embodiment will be specifically described.

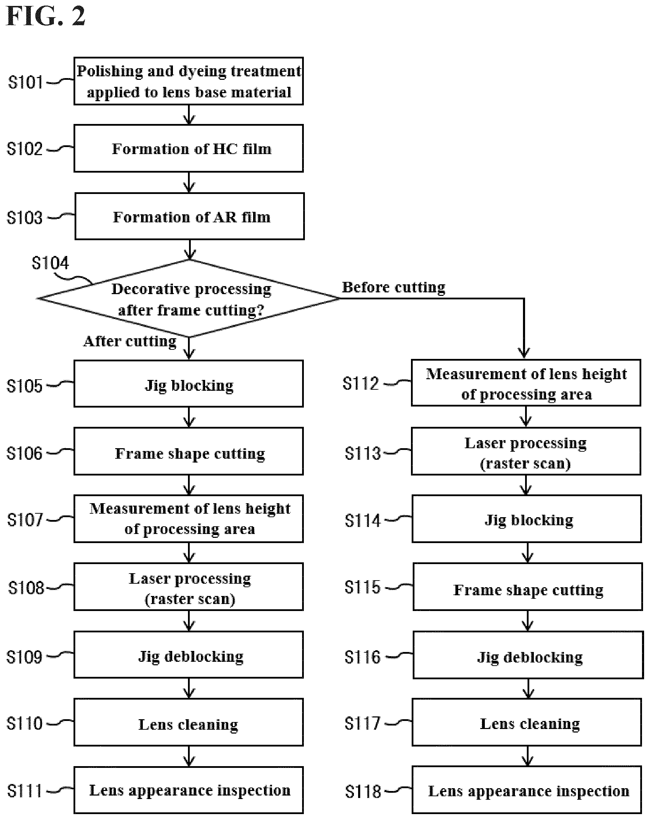

FIG. 2 is a flow chart showing an example of the procedure of the method for manufacturing a spectacle lens according to the present embodiment.

In manufacturing a spectacle lens, first, a lens base material, which is an optical base material, is prepared, and the lens base material is polished according to the prescription information of the spectacle wearer to obtain a lens shape with a desired optical performance, and dyed as necessary (subjected to dyeing treatment) (Step 101, hereinafter step is abbreviated as "S").

As the lens base material, for example, a resin material having a refractive index (nD) of about 1.50 to 1.74 is used.

Specifically, examples of the resin material include allyl diglycol carbonate, urethane resin, polycarbonate, thiourethane resin, and episulfide resin.

However, instead of these resin materials, the lens base material may be composed of other resin materials that provide a desired degree of refraction, or may be composed of inorganic glass.

Further, the lens base material has optical surfaces for constituting a predetermined lens shape on each of the object-side surface and the eyeball-side surface.

The predetermined lens shape may constitute any of a single focus lens, a multifocal lens, a progressive power lens, etc. In any of the above cases, each optical surface is constituted by a curved surface specified based on the prescription information of the spectacle wearer.

The optical surface is formed, for example, by a polishing treatment, but may be a cast (molded) product that does not require the polishing treatment.

The polishing treatment and dyeing treatment for the lens base material may be performed using a known technique, and detailed description thereof will be omitted here.

Thereafter, a hard coat film (HC film) is formed on at least one optical surface of the lens base material, preferably on both optical surfaces (S102).

The HC film is, for example, a film formed using a curable material containing a silicon compound, and has a thickness of about 3 µm to 4 µm.

The refractive index (nD) of the HC film is close to the refractive index of the material of the lens base material described above, for example, about 1.49 to 1.74, and the film configuration is selected depending on the material of the lens base material.

By coating with such an HC film, the durability of the spectacle lens can be improved.

The HC film may be formed, for example, by a dipping method using a solution in which a curable material containing a silicon compound is dissolved.

After the HC film is formed, an anti-reflection film (AR film) is subsequently formed so as to overlap the HC film (S103).

The AR film has a multilayer structure in which films with different refractive indexes are laminated, and is a film that prevents reflection of light by interference.

Specifically, the AR film has a multilayer structure in which a low refractive index layer and a high refractive index layer are laminated.

The low refractive index layer is composed of silicon dioxide (SiO₂) having a refractive index of about 1.43 to 1.47, for example.

Further, the high refractive index layer is composed of a material having a higher refractive index than the low refractive index layer, and is composed of, for example, zirconium oxide (ZrO₂), tin oxide (SnO₂), niobium oxide (Nb₂O₅), tantalum oxide (Ta₂O₅), titanium oxide (TiO₂), yttrium oxide (Y₂O₃), aluminum oxide (Al₂O₃), and a mixture of these (for example, indium tin oxide (ITO)), etc.

Among these, the high refractive index layer containing Sn and O has greater reactivity to ultrashort pulse laser, which will be described later, than other layers, and thus functions as a reactive layer. Specific examples of this layer are the above-described SnO₂ layer and ITO layer.

The term "reactive layer" as used herein refers to a layer that has low excitation energy when irradiated with laser. In one embodiment of the present invention, ultrashort pulse laser is used for irradiating the reactive layer.

The SnO₂ layer, which can serve as a reactive layer, has extremely low excitation energy due to multiphoton absorption (for example, two-photon absorption) and is highly reactive. This also applies to the ITO layer, and the ITO layer can also serve as the reactive layer in this specification.

As a result, in one embodiment of the present invention, at least a part of the SnO₂ layer (or ITO layer) sublimes or evaporates and disappears from the irradiated area together with the overlying SiO₂ layer.

The reactive layer that is relatively more reactive than other layers included in the multilayer structure refers to a SnO₂ layer or an ITO layer in one embodiment of the present invention. The reactive layer may be set to have a highest reactivity than other layers included in the multilayer structure.

An outermost layer of the multilayered AR film is configured to be a low refractive index layer (for example, a SiO₂ layer).

As described above, only the part of the surface layer side of the multilayer structure that has been irradiated with the laser is removed, and a decorative pattern representing a desired character, symbol, design, etc., is formed. In such a decorative pattern, when illumination light or sunlight is incident, the reflected light of that part has different reflection characteristics from other parts (other than the parts where part of the multilayer structure is removed).

Accordingly, when such a decorated lens is worn as spectacles, the decorated portions are perceived by others as having a different shine and color tone than the other portions.

Further, it is preferable that a lowermost layer (on the base material side) of the multilayer structure is also a low refractive index layer (for example, SiO₂ layer). Thereby, the laser-processed pattern is easily visible even from the opposite side to the laser-processed surface of the two surfaces of the spectacle lens.

Further, depending on the selection of a material for the outermost layer and the lowermost layer, the visibility may be different on the front and back sides of the lens (the visibility may be different in color tone or shine).

The above film constituting the AR film may be formed by, for example, ion-assisted vapor deposition.

A water-repellent film may be formed on the low refractive index layer that is the outermost layer of the AR film. The water-repellent film may also be referred to as an antifouling film.

In the present embodiment, the water-repellent film may be formed before marking is applied or after marking is applied.

The water-repellent film is a film that imparts water repellency to a surface, and can be constituted by being coated with a fluorine-based compound solution such as metaxylene hexafluoride, for example.

The water-repellent film may be formed by, for example, ion-assisted vapor deposition, as in the case of the AR film.

Further, other functional layers may be formed on the AR film. There is no problem whether such a functional layer contains a metal component or not, as long as the effect of precise processing by laser irradiation can be obtained. Further, such a functional layer may be a uniform film or may be scattered on the surface.

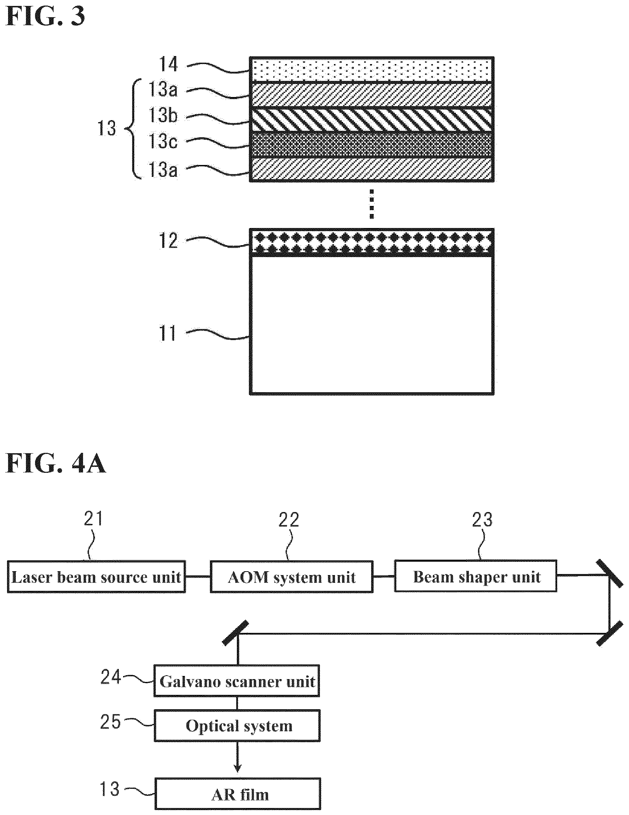

Through the film deposition processing as described above, a thin film having a laminated structure as shown in FIG. 3 is formed on the optical surface of the lens base material.

FIG. 3 is a side sectional view showing an example of a laminated structure of thin films according to the present embodiment.

The laminated structure in the illustrated example is constituted by laminating an HC film 12, an AR film 13, and a water-repellent film 14 in this order on the optical surface of a lens base material 11.

The AR film 13 has a multilayer structure in which a SiO₂ layer 13a, which is a low refractive index layer, and a SnO₂ layer 13b and a ZrO₂ layer 13c, which are high refractive index layers, are laminated, with its outermost layer (ie, the surface layer on the side of the water-repellent film 14) set as the SiO₂ layer 13a. Here, the SnO₂ layer is a high refractive index layer and is also a reactive layer.

After the thin film is formed, as shown in FIG. 2, the spectacle lens with the thin film formed thereon is then subjected to frame cutting and decorative pattern marking.

First, marking is applied to the spectacle lens after the thin film has been formed. When decorative processing is performed after frame cutting (S104: after cutting), first, jig blocking is performed in which one optical surface of the spectacle lens to be processed (specifically, an optical surface that is not subjected to decoration processing, which will be described later) is placed on a dedicated jig (S105). Then, the blocked spectacle lens is set in a spherical processing machine, and spherical processing (frame cutting processing) is performed to the spectacle lens, to cut an outer shape of the spectacle lens into a frame shape (S106). Jig blocking and frame cutting may be performed using a known technique, so detailed description thereof will be omitted here.

Next, while in the blocked state, a lens height of a processing area (i.e., a three-dimensional shape of the processing area) on the processing surface of the spectacle lens to be processed (specifically, an optical surface on the non-blocking side), is measured (S107). Although a measurement method is not particularly limited, it is conceivable to use a non-contact three-dimensional measuring machine, for example. The processing area is an area including a laser scan area, which will be described later.

After measuring the lens height in the processing area, laser processing is performed. That is, based on pattern data prepared in advance, laser processing is performed in which the processing area is irradiated with a laser beam while performing a raster scan of moving the laser beam (S 108). More preferably, the scan head can be simultaneously controlled in a height direction based on the three-dimensional shape data obtained above, and focus control (or defocus control) of laser irradiation is performed according to a curved surface of the lens optical surface. Vector scan may be used instead of raster scan. Thereby, marking is applied to the processing area on the surface of the spectacle lens to be processed.

After performing decorative pattern marking, jig deblocking is performed to remove the spectacle lens from the dedicated jig (S109), and lens cleaning is performed for the removed spectacle lens to remove residues and deposits (foreign objects) caused by marking (S110). After a final lens appearance inspection (S111), the manufacturing of the spectacle lens is completed.

On the other hand, for example, when frame cutting is performed after decoration processing (S104: before cutting), first, the lens height in the processing area (that is, the three-dimensional shape of the processing area) on the processing surface of the spectacle lens to be processed is measured (S112). The measurement method is the same as in the case where decoration processing is performed after frame cutting as described above.

After measuring the lens height of the processing area, laser processing is subsequently performed by irradiating the processing area with laser beam. The processing method can be the same as the above-described case of performing decoration processing after frame cutting.

Thereby, decorative pattern marking is applied to the processing area on the surface of the spectacle lens. Details of the laser processing for the decorative pattern marking will be described later.

After the decorative pattern marking, a frame cutting processing is performed to the marked spectacle lens.

When performing frame cutting, jig blocking is first performed in which one optical surface of the spectacle lens to be processed is placed on a dedicated jig (S114), then, the blocked spectacle lens is set in a lens shape processing machine, to perform lens shape processing (frame cutting processing) to cut an outer shape of the spectacle lens into a frame shape (S115).

After performing frame cutting processing, jig deblocking is performed to remove the spectacle lens from the dedicated jig (S116), and lens cleaning is performed for the removed spectacle lens, to remove residual materials, adhesion (foreign matter), etc., which are caused during processing (S 117). After performing a final lens appearance inspection (S118), the manufacturing of the spectacle lens is completed.

### (2) Details of the laser processing

Next, laser processing during decorative pattern marking will be explained in more detail.

In the present embodiment, the decorative pattern marking is performed as follows. The AR film 13 coating the optical surface of the lens base material 11 is irradiated with a laser beam, thereby partially removing a predetermined layer including the SiO₂ layer 13a, which is an outermost layer of the AR film 13.

Specifically, when the laser beam that has passed through the outermost SiO₂ layer reaches an underlying SnO₂ layer below the SiO₂ layer, the SnO₂ layer sublimates or evaporates due to the energy of the irradiation, and disappears from an irradiated area together with the overlying SiO₂ layer. That is, a predetermined layer including the outermost SiO₂ layer 13a is partially removed by laser processing using laser beam irradiation.

At this time, decorative pattern marking is applied to the irradiated area by removal processing for exposing the underlying high refractive index layer. The decorative pattern is visible due to a difference of the reflectance characteristics between the removed portion and the non-removed portion. Here, the exposed high refractive index layer is, for example, a ZrO₂ layer 13c.

The SnO₂ layer 13b having a thin thickness can be formed (for example, having a thickness of 3 to 20 nm, more preferably 3 to 10 nm). In the present embodiment, SnO₂ layer 13b having a thickness of 5 nm is formed.

In the above, the SnO₂ layer functions as a reactive layer that is most reactive to laser irradiation. This reactive layer preferably contains Sn and O, and in addition to the SnO₂ layer, ITO layer can also be used.

Further, in the above, the SnO₂ layer is removed by sublimation or evaporation, and an underlying high refractive ZrO₂ layer below the SnO₂ layer is exposed to the irradiated area. However, the reactive layer does not necessarily need to be completely removed and may be partially remained at the irradiated area.

For example, by laser irradiation, the reactive layer may be at least partially removed in the thickness direction of the layer.

Further, as another example of the partial removal by laser irradiation, the reactive layer may be partially remained at the laser irradiated area not only in the thickness direction of the layer but also when viewed from the laser irradiation direction (planar view). In the example of this paragraph, it does not matter if ZrO₂ is only partially exposed. This is because, similarly to ZrO₂, SnO₂ (or ITO) is also a high refractive material, and when the removed portion is viewed from above, even when SnO₂ partially remains, there will be no problem in visibility.

Therefore, it is sufficient to expose the high refractive index layer underlying below the reactive layer or expose the partially remained reactive layer.

The phenomenon that occurs during laser irradiation can be considered as follows. The reactive layer (SnO₂ layer, ITO layer, etc.) is preferably a conductive layer that has higher conductivity than other layers included in the laminated structure.

According to the inventor's review, it is found that the reactive layer containing SnO₂ has a smaller energy corresponding to a band gap at which excitation occurs when the layer is subjected to laser irradiation under conditions described later, compared to the overlying SiO₂ layer (on the outermost surface side) and compared to the underlying ZrO₂ layer. Therefore, compared to the adjacent overlying and underlying layers, the reactive SnO₂ layer tends to disappear most quickly due to sublimation/evaporation.

At this time, it is considered that a phenomenon called multiphoton absorption (for example, two-photon absorption) occurs, and processing can be performed with extremely high energy efficiency. In this case, it seems that the conductive SnO₂ layer has an advantageous effect.

Regarding the concern that after the SnO₂ layer disappears, the underlying ZrO₂ layer may be damaged by evaporation or dissolution due to the energy of irradiation, it can be solved as follows. By controlling the irradiation conditions to take advantage of the delay before the damage occurs, substantially only the reactive layer and the overlying layer above the reactive layer can be removed, and it is found that ultrashort pulse laser is advantageous, which will be described later, to control such a precise processing.

Here, a laser processing device used for laser processing will be briefly explained.

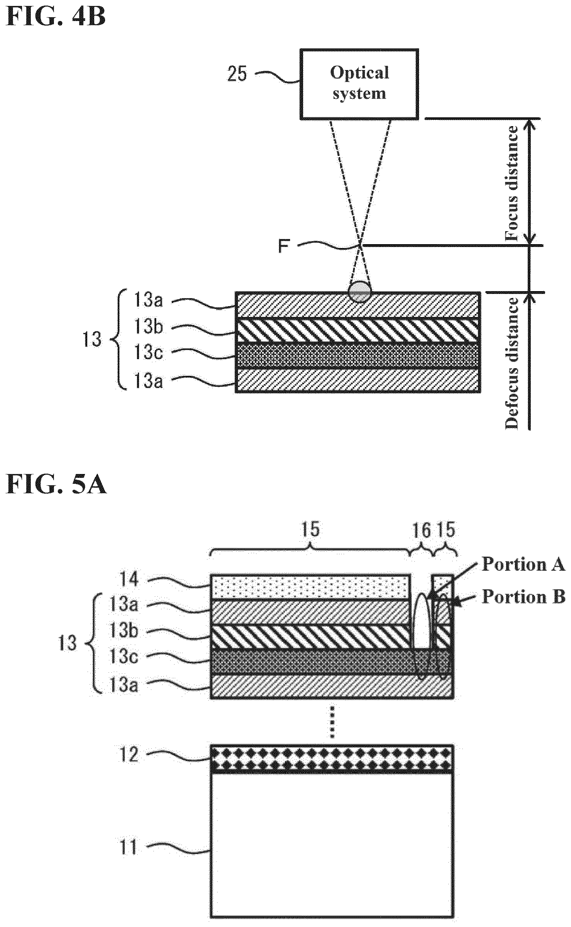

FIG. 4 is an explanatory view showing a schematic configuration example of a laser processing device used in the method for manufacturing a spectacle lens according to the present embodiment.

As shown in FIG. 4A, the laser processing device used in the present embodiment includes a laser beam source unit 21, an AOM (Acousto Optics Modulator) system unit 22, a beam shaper unit 23, a galvano scanner unit 24, and an optical system 25, and the AR film 13 is irradiated with laser beam through each of these units 21 to 25.

The laser beam source unit 21 emits a laser beam used for laser processing and is configured to emit an ultrashort pulse laser.

In the present embodiment, there is no particular limitation in the lower limit of the pulse width of the ultrashort pulse laser, and it is sufficient as long as the pulse width exceeds at least 0 femtoseconds, and 0.01 pico (10 femto) seconds or more is preferable. The use of the ultrashort pulse laser with a pulse width of 0.1 picoseconds or more (including 1 picosecond or more) is advantageous in terms of equipment maintenance and cost and is more suitable for commercial use.

For example, the ultrashort pulse laser with a pulse width of 0.01 picoseconds or more and less than 100 picoseconds, preferably a pulse width of 0.01 picoseconds or more and less than 50 picoseconds, more preferably a pulse width of 0.01 picoseconds or more and less than 15 picoseconds, can be used.

Further, for example, the ultrashort pulse laser with a pulse width of 0.1 picoseconds or more and less than 100 picoseconds, preferably a pulse width of 0.1 picoseconds or more and less than 50 picoseconds, more preferably a pulse width of 0.1 picoseconds or more and less than 15 picoseconds, can be used.

Further, the ultrashort pulse laser with a pulse width of 0.01 picosecond or more and less than 1 picosecond (or less than 0.1 picosecond), can also be used.

As the wavelength of the ultrashort pulse laser, for example, 266 nm of FHG (Fourth Harmonic Generation) in the ultraviolet region, 355 nm of THG (Third Harmonic Generation), or 1064 nm as a fundamental wavelength in the infrared region can be used. In the irradiation, an irradiation beam diameter can be selected depending on a desired processing design.

In order to apply processing to a minute design with high resolution, it is effective to narrow down a beam diameter to a small size, and in this case, shorter wavelengths are more advantageous, and therefore among the above wavelengths, 355 nm is more preferable, or 266 nm of FHG (Forth Harmonic Generation) is also suitable.

The pulse energy of the ultrashort pulse laser is, for example, 0.1 µJ or more and 30 µJ or less (maximum about 60 µJ) at 50 kHz. The beam diameter of the ultrashort pulse laser is, for example, 10 µm or more and 100 µm or less. The processing diameter can be, for example, 10 to 50 µm.

According to the study by the inventor of the present invention, the following was found regarding laser irradiation conditions.

(1) When the pulse width of ultrashort pulse laser is less than 0.1 picosecond:
   Good processing can be performed at any wavelength from 266 to 1064 nm. Shorter wavelengths are more advantageous in fine processing. However, a production load is large, including an initial investment for equipment and a running cost.
(2) When the pulse width of the ultrashort pulse laser is 0.1 picosecond or more and less than 1 picosecond:
   Good processing can be performed at any wavelength from 266 to 1064 nm. A shorter wavelength is more advantageous in fine processing.
(3) When the pulse width of the ultrashort pulse laser is 1 picosecond or more and less than 100 picoseconds:
   Good processing can be performed at any wavelength from 266 to 1064 nm. Shorter wavelengths are more advantageous in fine processing, and use of the shorter wavelengths is suitable for equipment maintenance, cost, stability of production conditions, etc.
(4) When the pulse width of the ultrashort pulse laser is 100 picoseconds or more and less than 1 nanosecond:
   Depending on the applied wavelength, non-uniformity occurs in processing stability. For example, when a short wavelength of 266 nm is used as an applicable wavelength, the reaction of SnO₂ may involve a damage to an underlying layer. Further, even at 355 nm, slight variations in irradiation conditions can cause loss of uniformity in processing, and it is impossible to prevent the removal processing from reaching the underlying layer below the SnO₂ layer.
(5) When the pulse width of the ultrashort pulse laser is 1 nanosecond or more:
   The SnO₂ layer and the layer on more surface side than the SnO₂ layer cannot be selectively and stably removed.

In the above cases (4) and (5), the visibility of the processed pattern is affected. For example, in the spectacle lens, there is a risk of interfering with a wearer's vision. Further, when observing the formed decorative pattern, incomplete visibility that occurs not through a clear lens but through a lens with a foreign object or dirt is likely to occur, unless the lighting condition is such that the pattern is clearly visible to the observer.

In order to prevent the above inconvenience, it is important that the removal processing using the ultrashort pulse laser is uniform in processing diameter and processing depth. For that purpose, with use of a predetermined ultrashort pulse width, it is effective to control and utilize the duration of energy due to irradiation and the delay in ablation of the underlying layer material, by using a predetermined ultrashort pulse width.

As long as such an ultrashort pulse laser can be emitted, there is no particular limitation in the specific configuration of the laser light source unit 21 or the combination of the wavelength and pulse width.

The AOM system unit 22 suppresses excessive irradiation of laser beam, which causes uneven processing during laser processing, by canceling a beam output of the laser beam immediately after the operation of the galvano scanner unit 24 starts and just before the operation ends.

The beam shaper unit 23 realizes laser processing using a laser beam with uniform energy distribution, by converting the laser beam from the laser beam source unit 21 to a top-hat type energy distribution from a Gaussian-type energy distribution. Particularly, use of the top-hat type distribution realizes stable and uniform processing when forming a predetermined processing area by partially overlapping a plurality of beam spots. This is because local excess energy addition caused by spot overlap is suppressed.

The galvano scanner unit 24 allows desired pattern marking to be applied on an optical surface by realizing laser scan to move a laser beam irradiation position from the laser light source unit 21 two or three dimensionally. It is assumed that a scannable range (i.e. a maximum laser processing area) 4 using the laser beam by the galvano scanner unit 24 is set to a size and shape that can completely encompass an outer shape of the spectacle lens to be processed (see FIG. 1).

The optical system 25 is configured by combining optical lenses such as a telecentric lens and mirror, to guide the laser beam from the laser beam source unit 21 so that the laser beam reaches a part of the spectacle lens to be processed.

Further, it is preferable that the laser processing device used in the present embodiment is configured so that the laser beam (i.e. ultrashort pulse laser) irradiation to the AR film 13 via the optical system 25 etc., can be performed with a focus setting (focusing) on the AR film 13, and can also be performed with a defocus setting on the AR film 13 as shown in FIG. 4B.

The defocus setting means that a focal position F of the laser beam to be irradiated is set a predetermined defocus distance away from the surface of the AR film 13, which is the part to be processed by the laser beam. When performing the laser beam irradiation with such a defocus setting, the beam energy can be dispersed on the surface of the AR film 13 that is irradiated with the laser beam, and this realizes uniform film removal processing. This is particularly useful when the height of the irradiated area may vary due to the surface shape of the AR film 13. However, the setting of the laser beam irradiation is not necessarily limited to defocus setting. For example, the laser beam irradiation may be performed with a focus setting in which the focal position F matches the surface of the AR film 13, or an in-focus setting in which the focal position F leaves in the opposite direction to the defocus setting.

Next, a procedure for laser processing performed using the laser processing device configured as described above will be explained.

For laser processing, first, a spectacle lens to be processed is set in a laser processing device. At this time, the spectacle lens is set so that the optical surface of the spectacle lens, more specifically, the surface of the AR film 13 on the optical surface becomes the surface to be processed. The optical surface to be processed may be either an object-side surface or an eyeball-side surface, but here, for example, the eyeball-side surface is assumed to be the processing surface.

After setting the spectacle lens, the laser beam source unit 21 and the galvano scanner unit 24 are operated based on pattern data prepared in advance (i.e. pattern data with a predetermined resolution created based on the decorative pattern to be obtained). Thereby, the processing area of the surface to be processed of the spectacle lens is irradiated with the ultrashort pulse laser in a pattern shape corresponding to the decorative pattern.

When irradiated with the ultrashort pulse laser, the ultrashort pulse laser passes through a water-repellent film 14 on the surface to be processed of the spectacle lens and reaches the AR film 13 on the surface to be processed. When the ultrashort pulse laser reaches the AR film 13, non-heat processing by the ultrashort pulse laser is performed on the AR film 13.

The ablation processing of the present embodiment is a technique that allows processing to be performed with high energy efficiency using a multiphoton absorption phenomenon of the ultrashort pulse laser, and more specifically, this is a removal processing in which the area irradiated with laser beam is instantly melted, evaporated, or sublimated and scattered, while minimizing an influence of heat around the processing area. According to such non-heat processing, highly reactive materials are instantly removed at the irradiated area, and therefore there is less thermal influence on the area around the processing area, and processing can be performed with less thermal damage (deformation due to heat, etc.).

The laser processing according to the present embodiment is ablation processing that is non-heat processing. Such processing includes a multiphoton absorption process (eg, two-photon absorption process) that generates the multiphoton absorption phenomenon described above. Therefore, even a material that is relatively transparent (having high transmittance) to laser can be processed efficiently and favorably by multiphoton absorption. In this case, the range of usable laser wavelengths is wide, and as the wavelength of the laser beam, 1064 nm can be advantageously used in addition to 266 nm (FHG), 355 nm (THG), and 532 nm (SHG). According to the present embodiment, particularly a significant effect is obtained when using the ultraviolet range (266 nm, 355 nm) or the infrared range (1064 nm) as the applied wavelength of the irradiation.

As described above, picosecond laser and femtosecond laser with short pulse widths are advantageous for inducing the multiphoton absorption. As a specific numerical value, for example, the pulse width can be less than 100 picoseconds, preferably less than 50 picoseconds, and more preferably less than 1 picosecond (ie, femtosecond). Although there is no particular lower limit, 10 femtoseconds or more is desirable.

When the non-heat processing is performed by ultrashort pulse laser irradiation, in the AR film 13, ultrashort pulse laser passes through the SiO₂ layer in the multilayer structure constituting the AR film 13, reaches the reactive layer (SnO₂ layer in the present embodiment). Then, the reactive layer sublimes/evaporates due to its instant reaction, and the outermost SiO₂ layer 13a is removed. In this way, only a predetermined layer including the outermost surface layer of the anti-reflection film is partially removed in a pattern shape corresponding to the decorative pattern. This causes the corresponding portion of the water-repellent film 14 also to be removed. Thereby, the underlying ZrO₂ layer 13c below the SnO₂ layer 13b is exposed at the irradiated area.

By performing laser processing as described above, a predetermined layer including the SiO₂ layer 13a, which is the outermost layer of the AR film 13, is partially removed (thereby forming a removed portion), and the ZrO₂ layer 13c as a high refractive index layer is exposed. Thus, decorative pattern marking is applied to the spectacle lens surface to be processed. Even when the reaction layer partially remains, the remaining reactive layer is a high refractive index layer, so the visibility of the decorative pattern is not impaired.

As described above, the irradiated area where the predetermined laser irradiation is applied, is partially processed within the surface to be processed.

### (3) Configuration of the spectacle lens

Next, the configuration of the spectacle lens obtained by the manufacturing method according to the procedure described above, that is, the configuration of the spectacle lens according to the present embodiment, will be specifically described.

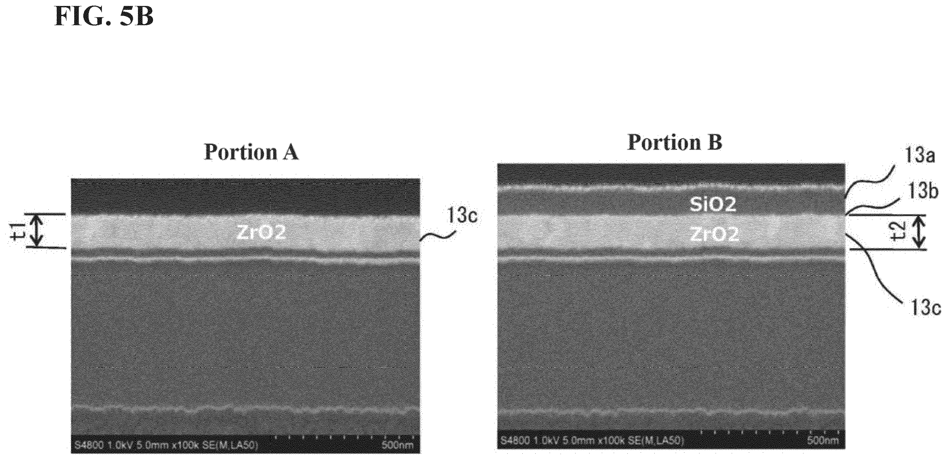

FIG. 5A is an explanatory view showing a configuration example of a main part of a spectacle lens according to the present embodiment. FIG. 5B shows one specific example of an observation result of a cross section of the AR film using an electron microscope. The illustrated example is an enlarged display of portions A and B in FIG. 5A and shows electron microscope images of the laser scan area 16 and the non-processing area 15.

As shown in FIG. 5A, the spectacle lens according to the present embodiment is configured by laminating the HC film 12, the AR film 13, and the water-repellent film 14 in this order on the optical surface of the lens base material 11. The AR film 13 has a multilayer structure in which the SiO₂ layer 13a, which is a low refractive index layer, and the SnO₂ layer 13b and the ZrO₂ layer 13c, which are high refractive index layers, are laminated, and is constituted such that a predetermined layer including the SiO₂ layer 13a which is the outermost layer of the multilayer structure (specifically, the SnO₂ layer which is the reactive layer, and a more surface side layer than the SnO₂ layer) is partially removed to expose the ZrO₂ layer 13c, which is a high refractive index layer. That is, the spectacle lens according to the present embodiment is configured, with the optical surface of the lens base material 11 including: a non-processing area 15 coated with the HC film 12, AR film 13 and the water-repellent film 14; and a laser scan area (patterned area) 16 where the outermost SiO₂ layer 13a of the AR film 13, the underlying SnO₂ layer 13b directly below the SiO₂ layer 13a, and the water-repellent film 14 are partially removed to expose the ZrO₂ layer 13c, which is a high refractive index layer.

The non-processing area 15 and the laser scan area 16 have different light reflectance depending on the presence or absence of the SiO₂ layer 13a, because one of them is coated with the SiO₂ layer 13a, and the other of them has the exposed ZrO₂ layer 13c (or the reactive layer, which is a high refractive index layer, when the reactive layer partially remains). Therefore, when the spectacle lens is irradiated with illumination light and viewed externally, the pattern shape formed by the laser scan area 16 can be visually recognized. That is, when the laser scan area 16 is formed in a pattern shape corresponding to the decorative pattern, the decorative pattern can be visually recognized. In this way, the removed portion of the predetermined layer of the AR film 13 can be used as a part constituting the decorative pattern.

The laser scan area 16 constituting the decorative pattern is formed by removing the SiO₂ layer 13a, which is the outermost layer of the AR film 13, and the SnO₂ layer 13b, which is the underlying layer directly below the SiO₂ layer 13a. That is, removal of the layer is stopped at a predetermined layer including the SnO₂ layer, which is a reactive layer. Therefore, peeling of each layer of the multilayer structure constituting the AR film 13 due to the formation of the laser scan region 16, can be suppressed.

As described above, the removal of the SiO₂ layer 13a, which is the outermost layer of the AR film 13, can be achieved by non-heat processing using ultrashort pulse laser irradiation. According to such non-heat processing, there is little thermal influence on the periphery of the processing area, and the occurrence of thermal damage can be suppressed. Further, by applying the above predetermined pulse width, stable processing can be performed while suppressing damage to the underlying layers below the reactive layer. This exposes the ZrO₂ layer 13c as a high refractive index layer, but damage to the exposed surface of the ZrO₂ layer 13c can be suppressed.

By suppressing the damage to the exposed surface of the ZrO₂ layer 13c, decrease in film thickness of the ZrO₂ layer 13c due to removal processing can also be suppressed. The thicknesses of the SiO₂ layer 13a and ZrO₂ layer 13c, etc., can be determined by acquiring an electron microscope image of the cross section of the AR film 13 and analyzing the acquired image.

FIG. 5B shows one specific example of the results of observation of the cross section of the AR film 13 using the electron microscope.

The illustrated example is an enlarged display of portions A and B in FIG. 5A, showing electron microscope images of the laser scan area 16 and the non-processing area 15. In the non-processing area 15, the SiO₂ layer 13a, the SnO₂ layer 13b, and the ZrO₂ layer 13c are laminated. However, since the SnO₂ layer 13b is thin (for example, about 5 nm), it is difficult to recognize it in the image. On the other hand, in the laser scan area 16, the SnO₂ layer 13b and the SiO₂ layer on more surface side than the SnO₂ layer 13b are removed, thereby exposing the ZrO₂ layer 13c.

Regarding the thickness of the ZrO₂ layer 13c exposed by removing the SnO₂ layer and the layer on more surface side than the SnO₂ layer, the illustrated electron microscope image shows that there is no significant difference between the thickness t1 at the laser scan area 16 and the thickness t2 at the non-processing area 15. More specifically, the ratio t1/t2 of the thickness t1 at the removed portion to the thickness t2 at the non-removed portion is, for example, within a range of 0.90 or more and 1.00 or less, preferably within a range of 0.95 or more and 1.00 or less, more preferably, within a range of 0.99 or more and 1.00 or less.

As described above, the ZrO₂ layer 13c, which is the exposed high refractive index layer, has no decrease in film thickness due to removal processing, or even if there is a decrease, the amount of decrease is suppressed to be extremely small. This is because the laser scan area 16 is formed by non-heat processing using ultrashort pulse laser irradiation, and no damage is caused to the underlying ZrO₂ layer 13c. This means that when the thickness ratio t1/t2 of the exposed ZrO₂ layer 13c is within the above range, the laser scan area 16 is formed without damaging the ZrO₂ layer 13c, and that the laser scan area 16 was presumably formed by non-heating processing using ultrashort pulse laser.

The reason why no damage occurs to the ZrO₂ layer 13 is that the reactivity of the reactive layer (here, the SnO₂ layer) caused by the ultrashort pulse laser is higher than that of the ZrO₂ layer. Such a difference in reactivity is remarkable by using ultrashort pulse laser with a predetermined pulse width, as will be described later.

The thickness of the ZrO₂ layer is 10x or more, preferably 15x or more than the thickness of the SnO₂ layer. Therefore, even when the ZrO₂ layer is slightly thinned after the SnO₂ layer disappears, there is no risk of film peeling and there is no effect on the visibility of the decorative pattern.

Further, the melting point of the SnO₂ layer is lower than that of the overlying SiO₂ layer and significantly lower than that of the underlying ZrO₂ layer, and this is considered to be related to the ease of control of ablation.

According to the spectacle lens configured as described above, even when decorative pattern marking is applied, peeling of each layer constituting the multilayered AR film 13 can be suppressed, and the exposed ZrO₂ layer 13c is not damaged. Therefore, even when applied to a spectacle lens product, decorative pattern marking is enabled on the spectacle lens without deteriorating the quality of the product.

### (4) Effects of the present embodiment

According to the present embodiment, first, the following advantageous effects are achieved.

In the present embodiment, even when the spectacle lens has the anti-reflection film on both sides, and when the reflectance of light in a predetermined range of wavelengths differs between the object-side surface and the eyeball-side surface, utilizing this fact, laser processing is performed from the optical surface with a lower reflectance, using a wavelength included in the above predetermined range.

With the method for manufacturing a spectacle lens according to the present embodiment, precise decoration can be applied efficiently and under stable conditions, even the spectacle lens has an anti-reflection film on both the object-side surface and the eyeball-side surface.

More specifically, one or more of the following effects can be obtained.

(a) In the present embodiment, decorative pattern marking is applied on the spectacle lens by performing processing to the AR film 13, which is one of the thin films coating the optical surface of the lens base material 11, in such a manner that the reactive layer (SnO₂ layer in the above embodiment) of the AR film 13 and the layer on more surface side than the reactive layer are partially removed, thereby exposing the ZrO₂ layer 13c, which is a high refractive index layer.
(b) In the present embodiment, decorative pattern marking is applied on the spectacle lens, by performing non-heat processing using ultrashort pulse laser irradiation in such a manner that the reactive layer (SnO₂ layer in the above embodiment) of the AR film 13 and the layer on more surface side than the reactive layer are partially removed, thereby exposing the ZrO₂ layer 13c which is a high refractive index layer. According to such non-heat processing, only a predetermined layer including the SiO₂ layer 13a which is the outermost layer of the AR film 13, can be selectively and uniformly removed, because the removal processing is performed by the effect of the pulse width rather than the effect of absorbed energy of the laser beam. In addition, due to non-heating processing, heat damage is prevented from occurring around the processing area, thereby preventing damage to the exposed surface of the ZrO₂ layer 13c that is an underlying layer below the reactive layer.
(c) As described above, in the present embodiment, decorative pattern marking is applied on the spectacle lens, by removing a predetermined layer including the outermost layer of the AR film 13 using an ultrashort pulse laser, thereby exposing the high refractive index layer. Therefore, according to the present embodiment, peeling of each layer of the AR film 13 can be suppressed, and the exposed ZrO₂ layer 13c is not damaged. Therefore, even when applied to a spectacle lens product, decorative pattern marking on the spectacle lens is enabled without deteriorating the quality of the product.
(d) In the present embodiment, the pulse width of the ultrashort pulse laser may be more than 0 femtoseconds, and preferably 0.01 pico (10 femto) seconds or more and less than 100 pico seconds, and use of 0.1 picoseconds or more (including 1 picoseconds or more) is advantageous in terms of equipment maintenance and cost, and is more suitable for commercial use.
   More specifically, regarding a laser irradiation condition, there are the following advantages depending on the pulse width.
   (1) When the pulse width of the ultrashort pulse laser is less than 0.1 picosecond:
      Good processing can be performed at both ultraviolet and infrared wavelengths. Shorter wavelengths are more advantageous in fine processing. However, a production load is large in terms of equipment maintenance and cost.
   (2) When the pulse width of the ultrashort pulse laser is 0.1 picosecond or more and less than 1 picosecond:
      Good processing can be performed at any of the above wavelengths. Shorter wavelengths are more advantageous in fine processing.
   (3) When the pulse width of the ultrashort pulse laser is 1 picosecond or more and less than 100 picoseconds:
      Good processing can be performed at any of the above wavelengths. Shorter wavelengths are more advantageous in fine processing, and use of the shorter wavelengths is suitable for equipment maintenance, cost, stability of production conditions, etc.
(e) In the present embodiment, in the non-heat processing by ultrashort pulse laser irradiation, the AR film 13 is irradiated with the ultrashort pulse laser, with a defocus setting. When the laser beam is emitted with such a defocus setting, beam energy can be dispersed on the surface of the AR film 13 irradiated with the laser beam, thereby enabling uniform film removal processing. This is particularly useful when the height of the irradiated area may vary due to the surface shape of the AR film 13.
(f) In the present embodiment, non-heat processing is performed by ultrashort pulse laser irradiation under a specified condition, and therefore damage to the exposed surface of the ZrO₂ layer 13c can be suppressed, the ZrO₂ layer 13c being a high refractive index layer that is exposed by removing the SnO₂ layer and the layers on more surface side than the SnO₂. Specifically, the ratio t1/t2 of the thickness t1 of the ZrO₂ layer 13c at the removed portion and the thickness t2 of the ZrO₂ layer 13c at the non-removed portion such as the SiO₂ layer 13 falls, for example, within a range of 0.90 or more and 1.00 or less, preferably within a range of 0.95 or more and 1.00 or less, and more preferably within a range of 0.99 or more and 1.00 or less.

Thus, the ZrO₂ layer 13c has no decrease in film thickness due to the removal processing, or even when there is a decrease, the amount of decrease is suppressed to be extremely small. Accordingly, when applied to a spectacle lens product, this is very preferable for applying decorative pattern marking on the spectacle lens without deteriorating the quality of the product.

### (5) Others

The embodiments of the present invention have been described above, and the disclosures described above indicate exemplary embodiments of the present invention. That is, the technical scope of the present invention is not limited to the above-described exemplary embodiments, and can be modified in various ways without departing from the gist thereof.

According to one aspect of the present invention, there is provided a method for manufacturing a spectacle lens, the method including:
performing desired marking processing by irradiating one surface of a spectacle lens with laser, the spectacle lens having an object-side surface and an eyeball-side surface each having a different anti-reflection film,
the marking processing including:
   determining spectral reflectance characteristics of the anti-reflection film provided on either the object side surface or the eyeball side surface;
   determining a wavelength in a ultraviolet region (for example, within a range of 200 to 400 nm) or in an infrared region (in a range of 800 to 1100 nm) with relatively low reflectance, as a laser wavelength to be applied to laser processing; and
   performing laser processing by using this laser wavelength.

According to another aspect of the present invention, there is provided a method for manufacturing a spectacle lens, the method including:
performing desired marking processing by irradiating one surface of a spectacle lens with laser, the spectacle lens having an object-side surface and an eyeball-side surface each having a different anti-reflection film,
the marking processing including:
   determining spectral reflectance characteristics of the anti-reflection film provided on the object side surface and the eyeball side surface, respectively;
   determining a surface with the relatively lower reflectance in a ultraviolet region (for example, within a range of 200 to 400 nm) or an infrared region (within a range of 800 to 1100 nm) as the surface to be laser processed; and
   determining a laser wavelength used for the laser processing as a wavelength within a range of the ultraviolet region or the infrared region, whichever has a lower reflectance.

The above-described embodiment shows a case in which decorative pattern marking is performed by non-heating processing using ultrashort pulse laser, but the present invention is not limited thereto. That is, the non-heating processing using the ultrashort pulse laser may be used to form any kind of pattern on the optical surface of an optical member, and can be applied to markings other than decorative patterns in exactly the same way.

The above-described embodiment shows a case in which the outermost layer of the AR film 13 is the SiO₂ layer 13a as a low refractive index layer, the underlying layer below the SiO₂ layer 13a is the SnO₂ layer 13b as a high refractive index layer, and the further underlying layer is a ZrO₂ layer 13c as a high refractive index layer, and when the SnO₂ layer reacts and is partially removed by laser irradiation, the SiO₂ layer is also removed accordingly, thereby exposing the ZrO₂ layer 13c as a high refractive index layer. However, the present invention is not limited thereto. The AR film 13 may be constituted by laminating layers other than the SiO₂ layer 13a, the SnO₂ layer 13b, and the ZrO₂ layer 13c.

Further, the outermost layer of the AR film 13 may be a layer other than the SiO₂ layer 13a as long as it is a low refractive index layer. The high refractive index layer may be a layer other than the SnO₂ layer 13b or the ZrO₂ layer 13c. For example, regarding the SnO₂ layer 13b as a reactive layer, a thin ITO layer having conductivity may be used instead of the SnO₂ layer 13b.

The above-described embodiment shows a case in which the SnO₂ layer, which is a reactive layer included in the AR film 13, and the SiO₂ layer 13a, which is the outermost layer directly above the SnO₂ layer, are removed by non-heating processing using the ultrashort pulse laser. Thereby, the effect of suppressing the film peeling is exhibited, as described above. In this way, the non-heat processing using ultrashort pulse laser enables to remove multiple predetermined layers including the outermost layer. Even when removing multiple layers including the outermost layer, the non-heat processing using ultrashort pulse laser enables to suppress damage to the exposed surface of the layer that will be exposed by removal, and therefore also enables to suppress a decrease in film thickness due to removal processing.

That is, even when removing multiple layers including the outermost layer, the underlying layer directly below the removed layer has a thickness such that the ratio t1/t2 of the thickness t1 at the removed portion to the thickness t2 at the non-removed portion is, for example, within a range of 0.90 or more and 1.00 or less, preferably within a range of 0.95 or more and 1.00 or less, more preferably within a range of 0.99 or more and 1.00 or less.

In the spectacle lens before laser processing in the present embodiment, an anti-reflection film is provided on each of the object-side and eyeball-side surfaces.

The anti-reflection film provided on the surface to which laser irradiation is applied (for example, the eyeball-side surface) has a reflectance that is relatively low to the applicable wavelength of the laser used, compared to the anti-reflection film provided on the other surface (for example, the object-side surface) (hereinafter referred to as a first anti-reflection film). The first anti-reflection film is also referred to as an anti-reflection film (1).

For example, in the present embodiment, since the applicable wavelength of laser irradiation is in the ultraviolet region, the anti-reflection film described in Japanese Patent No. 6,530,765 can be used as the first anti-reflection film.

Alternatively, the first anti-reflection film may be an anti-reflection film used on the rear surface (eyeball-side surface) as described in Japanese Patent No. 5966011. These are films whose reflectance is lower in the ultraviolet region than in other wavelength regions.

Alternatively, as for the reflectance characteristics of the anti-reflection film (first anti-reflection film) on the side to which laser irradiation is performed (for example, the eyeball-side surface), the reflectance is preferably 10% or less, more preferably 5% or less, to the applied wavelength set for laser irradiation.

The reflectance characteristics of the anti-reflection film (second anti-reflection film) provided on the other surface (for example, the object side surface) can be 20% or more, and may be 25% or more to the set applied wavelength.

Alternatively, regarding the reflectance characteristics of the anti-reflection film (first anti-reflection film) on the side to which laser irradiation is performed (for example, the eyeball-side surface), when the applied wavelength is 355 nm, it is preferable that the reflectance is 10% or less and is more preferable that the reflectance is 5% or less, to a wavelength in a range of 355±10nm. Further, when the applied wavelength is 266 nm, the anti-reflection film preferably has a reflectance of 10% or less, more preferably 5% or less, to a wavelength in a range of 266±10 nm.

Examples of the first anti-reflection film used in the present embodiment include the following. For example, the anti-reflection film having an average reflectance of 10% or less in the wavelength range of 355±10 nm, or an average reflectance 10% or less in a wavelength range of 266±10% may be used.

Alternatively, the film having a reflectance of 10% or less, more preferably 8% or less to light of any wavelength within a wavelength range of 330 to 400 nm, can be used as the first anti-reflection film. Alternatively, the film having an average reflectance of 10% or less, preferably 8% or less in a wavelength range of 250 to 300 nm, or having a reflectance of 10% or less, more preferably 8% or less to light of any wavelength within the wavelength range of 250 to 300 nm, can be used as the first anti-reflection film.

The first anti-reflection film can have a reflectance of 15% or less, preferably 10% or less in an entire visible wavelength range of 350 to 700 nm. Alternatively, the reflectance can be 10% or less in an entire visible wavelength range of 350 to 700 nm.

Further, in the spectacle lens before laser processing in the present embodiment, the anti-reflection film is provided on each of the object-side and eyeball-side surfaces, and as the anti-reflection film (for example, the first anti-reflection film) provided on the surface to be irradiated (for example, the eyeball-side surface), the anti-reflection film described in WO2020/067409 can be used. Since this is a film with low reflectance in the infrared region, it is useful when irradiating using the applicable wavelength in the ultraviolet region.

As in the case of the ultraviolet light described above, as for the reflectance characteristics of the anti-reflection film (first anti-reflection film) on the side to which laser irradiation is performed (for example, the eyeball-side surface), the reflectance is preferably 30% or less, more preferably 25% or less, to the set applied wavelength.

The reflectance characteristic of the anti-reflection film (second anti-reflection film) provided on the other surface (for example, the object-side surface) may be 40% or more, and may be 50% or more to the set applied wavelength. The second anti-reflection film is also referred to as an anti-reflection film (2).

Alternatively, as the reflectance characteristics of the anti-reflection film (first anti-reflection film) on the surface that is irradiated with laser (for example, the eyeball-side surface), when the applied wavelength is 1064 nm, the reflectance is preferably 30% or less, more preferably 25% or less, to a wavelength in the range of 1064±10 nm.

Examples of the anti-reflection film provided on one surface (for example, the eyeball side) of the spectacle lens used in the present embodiment include the following. For example, the anti-reflection film having an average reflectance of 25% or less in the wavelength range of 1064±10 nm may be used.

Alternatively, the film having a reflectance of 30% or less, more preferably 25% or less, to light of any wavelength within a wavelength range of 1000 to 1100 nm, can be used as the anti-reflection film.

Depending on the film design, there is an anti-reflection film that makes reflected light appear blue (such as a so-called blue-cut lens that has an enhanced blue light blocking effect), green, or purple. This is because reflected color in a visible light range enters viewer's eyes.

When the spectacle lens of the above specific example is subjected to laser processing according to the present embodiment, the following advantageous effects are produced.

For example, when laser processing is performed to the anti-reflection film having a high reflectance of light in a blue region, the spectacle lens appears blue when the spectacle lens 1 is viewed from a third person facing the front of the wearer of the spectacle lens 1.

On the other hand, the area where the laser processing was performed (decoration pattern 3) appears to be the color of the layer exposed by the laser processing (in this one specific example, yellow or gold, which is the color of the high refractive index layer).

As a result, for a third person facing the front of the wearer of the spectacle lens 1, the decorative pattern 3 on the spectacle lens 1 fitted into the frame is visually recognized with an aesthetic appearance, and such a lens can provide an identification effect and a design effect.

The aspect of good contrast during visual recognition of the above decorative pattern 3 can be realized by laser processing applied to each multilayer film on the object-side surface or by laser processing applied to each multilayer film on the eyeball-side surface of the spectacle lens.

No matter which side of the multilayer film is laser-processed, the decorative pattern will not enter the wearer's field of vision and interfere with the wearer's field of vision. That is, the spectacle lens marked with the decorative pattern 3 of the present embodiment does not impede the wearer's clear vision.

Further, when observing the wearer's lens from another person, and when the wearer's lens is at a predetermined relative position (or angle) with respect to indoor lighting or sunlight, the decorative pattern 3 is clearly visible, but when the wearer's lens is not at the above relative position, the decorative pattern 3 is not visible. Accordingly, an added design value can be added to the lens due to changes in visibility, such as appearance and disappearance of the predetermined decorative pattern 3. On the other hand, when the lens does not have the above-described predetermined relative positional relationship, it is recognized as a normal clear lens (or a predetermined color lens, photochromic lens, or polarized lens) when viewed by another person.

Even when the decorative pattern 3 of this aspect is formed within a frame cut lens area, it does not affect the function of the spectacles, and allows the lens to carry a desired character, symbol, or design, or allows a desired design applied to the lens.

The decorative pattern 3 of this aspect is formed through a processing to be visually recognized both from a processed surface side of the lens and from a back surface side of the lens.

Therefore, as the technical idea of the present invention, there is provided a spectacle lens that is an optical member manufactured by the method for manufacturing an optical member according to the present embodiment, or spectacles in which a spectacle lens that is an optical member according to the present embodiment is fitted into a frame.

It is preferable that each multilayer film on each surface of the spectacle lens includes one or more high refractive index layers and one or more low refractive index layers, and the total number of layers is 10 or less (suitably 9 layers or less, more preferably 8 layers or less).

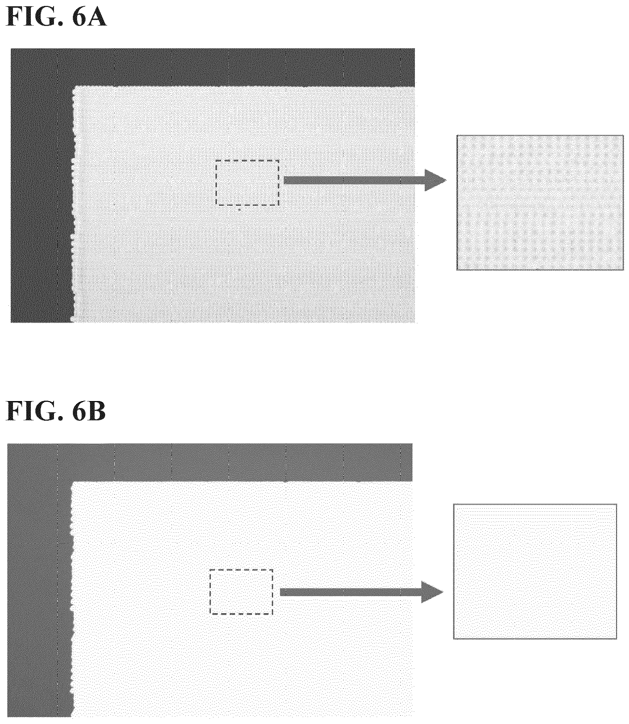

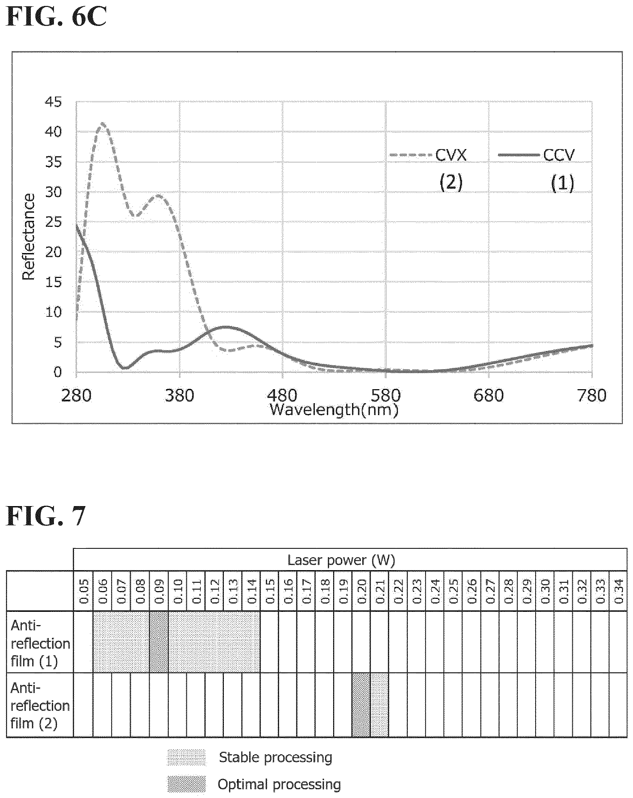

FIG. 6 shows the surface of a processed area when a sample of a specific example of a spectacle lens has an antireflection film on each of the object-side and the eyeball-side, and subjected to processing using a pulsed laser.

FIG. 6A is a photograph showing the result of providing an anti-reflection film (2) on the object-side surface of the spectacle lens of this specific example and processing is applied thereto using pulse laser beam with a wavelength of 355 nm and a pulse width of 10 pico or more and less than 20 pico. The figure on the right is an enlarged view.

FIG. 6B is a photograph showing the result of providing an antireflection film (1) on the eyeball-side surface of a specific example of the spectacle lens and processing is applied thereto using pulse laser beam with a wavelength of 355 nm and a pulse width of 10 pico or more and less than 20 pico. The figure on the right is an enlarged view.

In FIGS. 6A and 6B, a light colored area corresponds to the laser scan area 16, and a dark colored area indicates a non-processed area.

FIG. 6C shows reflection characteristics (simulation data) of the antireflection film (1) and the antireflection film (2) of the spectacle lens of the above-described specific example, wherein the vertical axis indicates a reflectance (%) and the horizontal axis indicates a wavelength (nm). Here, the anti-reflection film on the eyeball-side surface is the anti-reflection film (1) (CCV, number 1 in the figure), and the anti-reflection film on the object-side surface is the anti-reflection film (2) (CVX, number 2 in the figure).

In both FIGS. 6A and 6B, the laser is moved while irradiating in the horizontal direction by raster scanning, and an entire surface is finally subjected to processing.

The surface quality after laser processing is better in FIG. 6B (processing from the eyeball-side surface on which the anti-reflection film (1) is provided) than in FIG. 6A (processing from the object-side surface on which the anti-reflection film (2) is provided). That is, the removal processing by laser irradiation is performed uniformly, and an exposed surface has high smoothness. Also, no damage to the underlying layers is observed.

This is related to the fact that the reflectance of the anti-reflection film (1) to the applied wavelength for laser processing, is lower than the reflectance of the antireflection film (2). Here, at the applied wavelength of 355 nm, the difference between the reflectance of the anti-reflection film (1) and the reflectance of the anti-reflection film (2) is 20% or more, with the former being lower. Further, at the applied wavelength, the reflectance on the (object-side) surface formed with the anti-reflection film (2) exceeds 25%, and meanwhile, the reflectance on the (eyeball-side) surface formed with the antireflection film (1) is 5% or less. This is very advantageous for processing.

That is, this means that processing from the eyeball-side surface does not require excessively high output compared to processing from the object-side surface, and sublimation or evaporation of the reactive layer could be efficiently caused under stable conditions, and as a result, the removal processing was performed uniformly without damaging the underlying layer.

FIG. 7 shows the results of determining a specific laser power range that provides stable processing conditions for anti-reflection film (1) and anti-reflection film (2), when performing the same processing as in FIG. 6.

Here, as in FIG. 6, a pulse laser beam with a wavelength of 355 nm and a pulse width of 10 pico or more and less than 20 pico was used.

Further, in FIG. 7, the laser power that provides stable processing conditions is indicated by a shaded area (part 1) (dots), and among them, the laser power that provides an optimum condition is indicated by hatching (part 2) (diagonal lines). Optimum means a condition under which a stable processing condition can be obtained even under an influence of a slight fluctuation in laser output due to an environmental change such as a temperature change.

As a result, stable processing as shown in FIG. 6B can be performed to the anti-reflection film (1) at about 0.10 ± 0.04 (W), and can be performed to the anti-reflection film (2) at about 0.20 (W), and it was found that an optimum laser power to be applied was 0.09W and 0.20W, respectively.

That is, it was found that by using the anti-reflection film (1), a stable processing range was four times or more wider than when using the anti-reflection film (2), and it was confirmed that use of the anti-reflection film (1) is suitable for mass production.

In the above, an example was given in which laser processing is performed to the eyeball-side surface of the spectacle lens, but processing may be also performed to the object-side surface of the spectacle lens. In that case, processing can be performed to the object-side surface of the anti-reflection film to have appropriate reflection characteristics for the wavelength of the laser applied for irradiation. For example, when using the anti-reflection film (1) and anti-reflection film (2) having spectral reflection characteristics shown in FIG. 6C, and when performing processing using a laser beam having a wavelength of 280 nm or less, it may be advantageous to perform processing from the object side on which the antireflection film (1) is formed.

### Description of signs and numerals

1... Spectacle lens, 2... Frame shape, 3... Decorative pattern, 4... Scannable range, 11... Lens base material (optical base material), 12... HC film, 13... AR film, 13a... SiO₂ layer (low refractive index) layer), 13b...SnO₂ layer (high refractive index layer), 13c...ZrO₂ layer (high refractive index layer), 14...water repellent film, 15...unprocessed area, 16...laser scan area (patterned area), 21... Laser light source unit, 22... AOM system unit, 23... Beam shaper unit, 24... Galvano scanner unit, 25... Optical system

## Claims

1. A method for manufacturing a spectacle lens, the method comprising:
performing desired marking processing by irradiating one surface of a spectacle lens with laser, the spectacle lens having an object-side surface and an eyeball-side surface each having a different anti-reflection film,
the marking processing comprising:
determining an applicable wavelength of the laser to be used;
selecting a surface with an anti-reflection film having a relatively low reflectance to the applied wavelength, out of the object-side surface and the eyeball-side surface; and
performing laser irradiation to the selected surface using the applied wavelength.

2. A method for manufacturing a spectacle lens, the method comprising:
performing desired marking processing by irradiating one surface of a spectacle lens with laser, the spectacle lens having an object-side surface and an eyeball-side surface each having a different anti-reflection film,
the marking processing comprising:
selecting a surface with a relatively low reflectance for light in a predetermined wavelength range, out of the object-side surface and the eyeball-side surface; and
applying laser irradiation to the selected surface using a laser beam having a wavelength within the predetermined wavelength range.

3. The method for manufacturing a spectacle lens according to claim 1 or 2, wherein the applied wavelength or the wavelength within the predetermined wavelength range is within a range of 200 to 400 nm, or within a range of 800 to 1100 nm.

4. The method for manufacturing a spectacle lens according to claim 1 or 2, wherein the anti-reflection film on the selected surface has a reflectance of 10% or less to the applied wavelength or the wavelength within the predetermined wavelength range.

5. The method for manufacturing a spectacle lens according to claim 1 or 2, wherein the anti-reflection film on the selected surface has a reflectance lower than the other surface by 10% or more to the applied wavelength or the wavelength within the predetermined wavelength range.

6. The method for manufacturing a spectacle lens according to claim 1 or 2, the method comprising:
performing desired laser processing by irradiating an anti-reflection film with ultrashort pulse laser; thereby
partially removing a predetermined layer including an outermost layer of a multilayer structure, the anti-reflection film having the multilayer structure including laminated layers of a low refractive index layer and a high refractive index layer, and being formed to coat an optical surface of a lens base material,
wherein the anti-reflection film on the selected surface includes a reactive layer that is relatively more reactive to irradiation with the ultrashort pulse laser than other layers included in the multilayer structure, and therefore the laser processing is performed to visually recognize the reactive layer by visible light by at least partially removing the reactive layer.

7. The method for manufacturing a spectacle lens according to claim 6, wherein the ultrashort pulse laser has a pulse width of 10 femtoseconds or more and less than 100 picoseconds.

8. A spectacle lens, which is a spectacle lens whose one surface is subjected to laser marking, having different anti-reflection films provided on an object-side surface and an eyeball-side surface,
wherein the anti-reflection film provided one surface has a lower reflectance than the anti-reflection film provided on the other surface, to at least light with a wavelength of 200 to 400 nm.

9. A spectacle lens, which is a spectacle lens whose one surface is subjected to a laser marking, having different anti-reflection films provided on an object-side surface and an eyeball-side surface,
wherein the anti-reflection film provided on one surface has a lower reflectance than the anti-reflection film provided on the other surface, to at least light with a wavelength of 800 to 1100 nm.

10. The spectacle lens according to claim 8 or 9, wherein the spectacle lens comprises:
a lens base material having an optical surface; and
an anti-reflection film coating the optical surface of the lens base material,
the anti-reflection film having a multilayer structure including a laminated layer of a low refractive index layer and a high refractive index layer,
the anti-reflection film including a reactive layer that has a relatively higher reactivity to ultrashort pulse laser irradiation than other layers included in the anti-reflection film,
wherein a removed area after at least partially removing a predetermined layer including an outermost layer of the multilayer structure is marked with a marking that allows the removed area to be visually recognized by visible light, because the underlying high refractive index layer below the reactive layer or the reactive layer that remains partially is exposed.

11. A spectacle lens manufactured by the method for manufacturing a spectacle lens according to claim 1 or 2, or spectacles in which the spectacle lens according to claim 8 or 9, is fitted into a frame.
